# EUROPÄISCHE PATENTSCHRIFT

(11) **EP 2 532 933 B1**
(45) Veröffentlichungstag und Bekanntmachung des Hinweises auf die Patenterteilung: **04.05.2022**
(21) Anmeldenummer: 11169230.7
(22) Anmeldetag: 09.06.2011
(51) Int. Cl.: F16K 17/16

(54) **Vorrichtung zur Begrenzung eines Öffnungswinkels einer Berstscheibe**
Device for limiting an opening angle of a bursting disc
Dispositif de limitation d'un angle d'ouverture d'un disque d'éclatement

(43) Veröffentlichungstag der Anmeldung: 12.12.2012
(73) Patentinhaber: Rembe GmbH Safety + Control, 59929 Brilon (DE)
(72) Erfinder: Penno, Stefan, 59929 Brilon (DE); Bunse, Roland, 59929 Brilon (DE)
(74) Vertreter: Graefe, Jörg

(56) Entgegenhaltungen:
- DE-U1- 20 215 501
- US-A1- 2001 011 471
- US-A1- 2008 041 454
- US-B1- 6 192 914

## Beschreibung

Die vorliegende Erfindung betrifft eine Anordnung aus einer Berstscheibe und einer Vorrichtung zur Begrenzung eines Öffnungswinkels der Berstscheibe, wobei die Berstscheibe Randbereiche hat, über welche die Berstscheibe an Randbereichen einer Öffnung einer technischen Einrichtung anbringbar ist, und einen zwischen diesen liegenden mittleren Bereich hat, mit welcher die Öffnung der technischen Einrichtung verschließbar ist.

Eine Berstscheibe ist zum Beispiel aus der Patentschrift EP 0 773 393 B2 bekannt. Berstscheiben dienen dem Explosionsschutz und können sowohl als Überdruckabsicherung als auch zur Explosionsdruckentlastung bei Silos, Filteranlagen, Bunkern, Zyklonen und vielem mehr eingesetzt werden. Berstscheiben verschließen im störungsfreien Betrieb der abzusichernden technischen Einrichtung eine Öffnung in einer Wand, eines Bodens oder einer Decke. Bei einem Überdruck, insbesondere in Folge einer Explosion oder einem Unterdruck birst die Berstscheibe und kann so für einen Druckausgleich zwischen dem Hohlraum in der abzusichernden technischen Einrichtung und der Umgebung dieser technischen Einrichtung sorgen, ohne dass die technische Einrichtung im Übrigen zerstört wird.

Der Vorteil von Berstscheiben ist, dass es zu einer Druckentlastung an einer dazu vorgesehenen Stelle der abgesicherten technischen Einrichtung kommt, nämlich an der Stelle, an welcher die Berstscheibe eingebaut ist.

An der Stelle, an welcher die Berstscheibe eingebaut ist, kann eine Druckwelle und/oder eine Flamme aus der abgesicherten Einrichtung austreten. Daher muss dafür gesorgt sein, dass der Bereich vor der Berstscheibe frei ist, so dass die Druckwelle und/oder die Flamme keine Schäden an Gegenständen oder Personen anrichten kann.

Die Berstscheibe muss daher an einer Stelle der abgesicherten Einrichtung angebracht sein, wo es zu einer ungehinderten Ausbreitung der Druckwelle und/oder Flamme in der Umgebung kommen kann. Damit ist die Auswahl der Stellen der technischen Einrichtung an denen eine Berstscheibe angebracht werden kann, zum Beispiel durch die Bebauung in der Umgebung beschränkt. Ebenso kann, wenn die mit der Berstscheibe gesicherte Einrichtung bereits vorhanden ist, die Gestaltung der Umgebung nicht ohne Berücksichtigung von der vorhandenen Berstscheibe vorgenommen werden.

Abhilfe kann da eine Vorrichtung zur Begrenzung eines Öffnungswinkels einer Berstscheibe schaffen. Durch die Begrenzung des Öffnungswinkels der Berstscheibe kann Einfluss auf die Ausbreitungsrichtung einer Druckwelle und/oder Flamme genommen werden. Mittels der Vorrichtung kann bewirkt werden, dass die Berstscheibe im Entlastungsfall nicht wie üblich um bis zu 180° aus der Ausgangslage geschwenkt wird, sondern um kleinere Winkel geschwenkt wird. Dadurch kann erreicht werden, dass durch die Bestscheibe die Druckwelle und/oder Flamme in eine bevorzugte Richtung gelenkt wird. Damit wird es möglich, die Stelle an welcher die Berstscheibe angebracht ist freier zu wählen und die Umgebung der abgesicherten technischen Einrichtung freier zu gestalten.

Eine derartige Vorrichtung zur Begrenzung eines Öffnungswinkels einer Berstscheibe ist aus der Gebrauchsmusterschrift DE 202 15 501 U1 bekannt. Die Vorrichtung zur Begrenzung des Öffnungswinkels wird durch seitlich an der Berstscheibe angebrachte in der Gebrauchsmusterschrift als Faltenbälge bezeichnete Dreiecksstücke gebildet, die aus einem in der Gebrauchsmusterschrift nicht näher spezifizierten flexiblen Material hergestellt sind. Die Dreiecksstücke sind mit einer Kante an einem Rand der Öffnung angebracht, die von der Berstscheibe verschlossen ist. Eine andere Kante ist an einem Rand der Berstscheibe befestigt. Diese beiden Kanten des Dreiecksstücks stoßen in einem Bereich zusammen, in dem die Berstscheibe im Entlastungsfall schwenkt. Es kann aber auch die gesamte aus der Gebrauchsmusterschrift DE 202 15 501 U1 bekannte Vorrichtung als Vorrichtung zur Begrenzung eines Öffnungswinkels einer Berstscheibe betrachtet werden. Dann entsprechen die Dreiecksstücke und die Berstscheibe einem ersten Bereich einer Platte einer eingangs genannten Vorrichtung. Diese Dreiecksstücke sind dann Teil der Platte, die flexible Bereiche aufweisen kann.

Aus der Gebrauchsmusterschrift DE 20 2006 002 760 U1 ist ferner eine Vorrichtung zur Begrenzung eines Öffnungswinkels einer Druckentlastungsklappe bekannt, die anders ausgestaltet ist aber den gleichen Zweck erfüllen kann.

Die aus der Gebrauchsmusterschrift DE 202 15 501 U1 bekannte Vorrichtung zur Begrenzung des Öffnungswinkels einer Berstscheibe hat den Nachteil, dass die Dreiecksteile aus dem flexiblen Material ungeschützt der Witterung und anderen Umwelteinflüssen ausgesetzt sind. Über die langen Zeiträume, in denen eine Bertscheibe im Gebrauch bleibt, können daher Schäden an den Dreiecksteilen entstehen, die die Funktion der Vorrichtung zur Begrenzung des Öffnungswinkels oder sogar der Bertscheibe beeinträchtigen.

Die aus der Gebrauchsmusterschrift DE 202 15 501 U1 bekannte Vorrichtung zur Begrenzung des Öffnungswinkels hat sich in der Praxis nicht durchgesetzt.

Das Dokument US 6 192 914 B2 offenbart in den Fig. 1 bis 4 und der dazu gehörigen Beschreibung eine Umschlagberstscheibe 28. Das in dem Dokument US 6 192 914 B2 mit dem Bezugszeichen 36 bezeichnete "*safety member*", also als Sicherheitsteil bezeichnet. Das Sicherheitsteil hat die in der Spalte 3, Zeilen 15 bis 20 des Dokumentes US 6 192 914 B2 und in Spalte 5, Zeilen 11 bis 52 des US 6 192 914 B2 dargestellten Aufgaben und Funktionen.

Die Funktionen des Sicherheitsteils sind Folgende: Das Sicherheitsteil weist einen Ring 40 auf, an dem Punkte 44 vorgesehen sind, die einen Druck oder wohl besser eine Kraft konzentriert an Orten einer Berstscheibe ausüben können, um ein Einreißen der Berstscheibe zu bewirken (siehe US 6 192 914 B2, Spalte 3, Zeilen 15 bis 20 und Spalte 5, Zeilen 11 bis 38). Die Funktion des Sicherheitsteils 36 ist es somit, ein Einreißen der Berstscheibe im Fall eines Überdrucks im mit der Berstscheibe gesicherten Behälter oder Rohr zu erreichen.

Das Sicherheitsteil weist ferner einen Fangriegel 42 ("*catcher bar*") auf. Dieser Fangriegel stützt einen Scharnierbereich 50 der Berstscheibe 28 beim Umschlagen und Aufreißen der Bestscheibe und bremst einen Ausblasbereich 48 ("blow-out portion") der Bestscheibe, es handelt sich dabei um einen mittleren Bereich der Bestscheibe 28, beim Umbiegen in das freie Innere eines Rohrstutzens 14. Das Stützen des Scharnierbereichs 50 und das Bremsen des Ausblasbereiches 48 der Berstscheibe durch den Fangriegel 42 verhindert, dass der Ausblasbereich 48 davor von dem übrigen Bereich der Berstscheibe getrennt oder abgerissen zu werden (US 6 192 914 B2, Spalte 5, Zeilen 39 bis 52). Die Funktion des Sicherheitsteils 36 ist es also, auch ein Abtrennen oder Abreißen des Ausblasbereiches 48 der Berstscheibe zu verhindern.

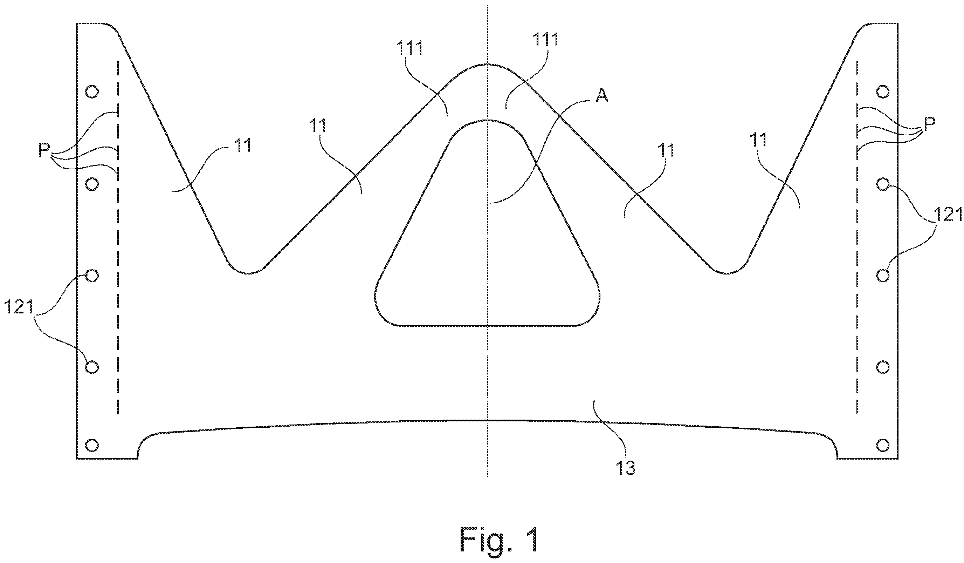

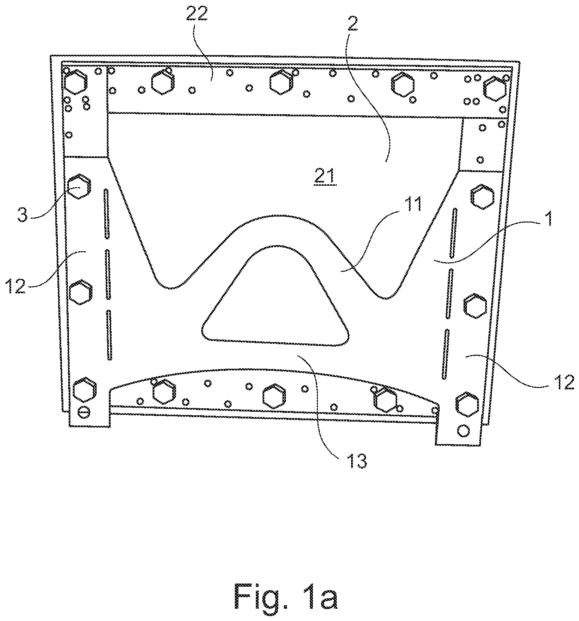

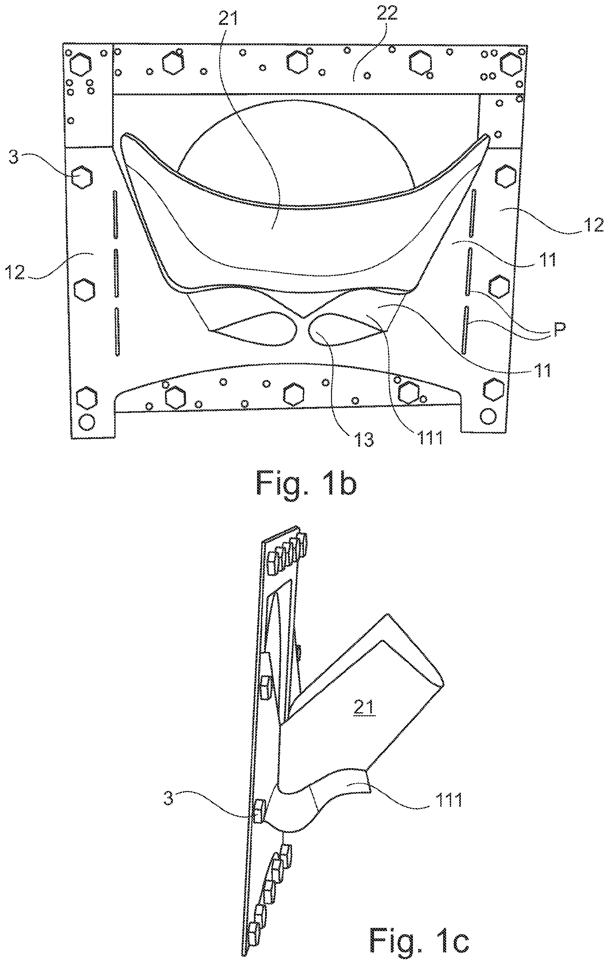

Beim Umschlagen und Aufreißen der aus dem Dokument US 6 192 914 B2 bekannten Berstscheibe 28 schlägt der Ausblasbereich 48 an dem Fangriegel 42 des Sicherheitsteils 36 an (Spalte 5, Zeilen 39 und 40, Vergleich der Figuren 1 und 4). Der Öffnungswinkel der Berstscheibe wird durch den Fangriegel allenfalls auf 90° begrenzt.

Hier setzt die vorliegende Erfindung an.

Der Erfindung lag das Problem zu Grunde eine Anordnung mit einer Vorrichtung zur Begrenzung des Öffnungswinkels vorzuschlagen, welche trotz Umgebungseinflüssen in ihrer Funktion unbeeinflusst bleibt und mit welcher ein Öffnungswinkel auf weniger als 90° beschränkt werden kann.

Dieses Problem wird erfindungsgemäß durch eine Anordnung mit den Merkmalen des Anspruchs 1 gelöst, Im Entlastungsfall drückt der mittlere Bereich der Berstscheibe auf den wenigstens einen ersten Bereich der erfindungsgemäßen Vorrichtung und biegt diesen durch oder wölbt diesen aus. Der wenigstens eine erste Bereich der Vorrichtung setzt dadurch der Öffnungsbewegung eines Teils des mittleren Bereichs der Berstscheibe einen Widerstand entgegen, während ein anderer Teil oder andere Teile des mittleren Bereichs der Berstscheibe im Vergleich dazu wenig oder nicht von dem wenigstens einen ersten Bereich der Vorrichtung in der Öffnungsbewegung behindert werden. Durch diese bewusst herbeigeführte Behinderung der Öffnungsbewegung eines Teils des mittleren Bereichs der Berstscheibe kann der Berstscheibe im Entlastungsfall eine Form gegeben werden, die dazu führt, dass einer Druckwelle und/oder Flamme eine vorbestimmte Richtung gegeben wird.

Die Platte einer erfindungsgemäßen Anordnung weist auf einander gegenüberliegenden Seiten des ersten Bereiches zweite Bereiche, insbesondere Flansche auf, mit denen die Platte befestigbar ist, wobei der erste Bereich mit den auf den einander gegenüberliegenden Seiten des ersten Bereiches angeordneten zweiten Bereichen verbunden ist. Diese zweiten Bereiche können deckungsgleich mit Randbereichen der Berstscheibe sein, über welche die Berstscheibe an der zu sichernden technischen Einrichtung befestigt ist. Sind in den zweiten Bereichen der Vorrichtung und in den Randbereichen der Berstscheibe fluchtende Löcher vorgesehen, können diese dazu genutzt werden die erfindungsgemäße Vorrichtung und die Berstscheibe mit den gleichen Schrauben an der zu sichernden Einrichtung zu befestigen.

Die Platte einer Vorrichtung einer erfindungsgemäßen Anordnung kann einen dritten Bereich umfassen, der im Vergleich zu dem ersten Bereich nicht oder weniger ausgewölbt oder durchgebogen werden kann. Der dritte Bereich kann zwischen den zweiten Bereichen und benachbart zu dem wenigstens einen ersten Bereich angeordnet sein. Der dritte Bereich kann an einem Rand der Platte liegen. In der Kombination mit einer Berstscheibe kann der dritte Bereich benachbart zu einem Bereich der Berstscheibe sein, in dem der mittlere Bereich der Berstscheibe im Entlastungsfall gegenüber einem Randbereich der Berstscheibe geschwenkt wird.

Der wenigstens eine erste Bereich einer Vorrichtung einer erfindungsgemäßen Anordnung kann wenigstens einen Einschnitt, eine Einbuchtung, eine Einkerbung oder Ähnliches aufweisen. Der wenigstens eine erste Einschnitt, die wenigstens eine erste Einbuchtung oder die wenigstens eine erste Einkerbung ragen vorteilhaft von einem ersten Rand in den wenigstens einen ersten Bereich der Platte hinein. Durch den Einschnitt, die Einbuchtung oder Einkerbung kann der damit versehene erste Bereich der Platte im Vergleich zu einer Gestaltung ohne Einschnitt, Einbuchtung oder Einkerbung einfacher herausgewölbt werden oder gebogen werden.

Der wenigstens eine erste Bereich kann einen Streifen umfassen oder von einem Streifen gebildet sein, der mäanderförmig, zackenförmig, zickzackförmig oder ähnlich ist. Ein solcher Streifen kann einfacher herausgewölbt oder gebogen werden als ein geradlinig verlaufender Streifen.

Der wenigstens eine erste Bereich und der dritte Bereich können an einem oder mehreren Punkten oder in einem oder mehreren Abschnitten unmittelbar miteinander verbunden sein.

Der wenigstens eine erste Bereich und der dritte Bereich einer erfindungemäßen Vorrichtung können ein Loch in der Platte einschließen. Das Loch kann dreieckig oder annähernd dreieckig sein.

Ausführungsbeispiele von erfindungsgemäßen Vorrichtungen werden anhand der Zeichnungen näher erläutert. Darin zeigt:
- Fig. 1: eine Ansicht einer ersten erfindungsgemäßen und bevorzugten Vorrichtung von vorn,
- Fig. 1a: eine Ansicht einer Anordnung aus einer Berstscheibe und der ersten Vorrichtung von vorn,
- Fig. 1b: eine Ansicht der Anordnung aus der Berstscheibe und der ersten Vorrichtung von vorn nach einem Entlastungsfall,
- Fig. 1c: eine Ansicht der Anordnung aus der Berstscheibe und der ersten Vorrichtung von der Seite nach einem Entlastungsfall,
- Fig. 2: eine Ansicht einer zweiten erfindungsgemäßen Vorrichtung von vorn,
- Fig. 3: eine Ansicht einer dritten erfindungsgemäßen Vorrichtung von vorn.

Die in den Figuren 1 bis 3 dargestellten erfindungsgemäßen Vorrichtungen zum Begrenzen eines Öffnungswinkels einer Berstscheibe weisen eine Platte 1 auf, die aus einem Edelstahlblech durch Zuschneiden, Stanzen und/oder Perforieren hergestellt sind. Das Edelstahlblech kann beispielsweise eine Stärke von 0,5 mm haben.

Die Platten 1 weisen unterschiedliche Bereiche 11, 12, 13 auf, die unterschiedliche Funktionen für die erfindungsgemäße Vorrichtung wahrnehmen.

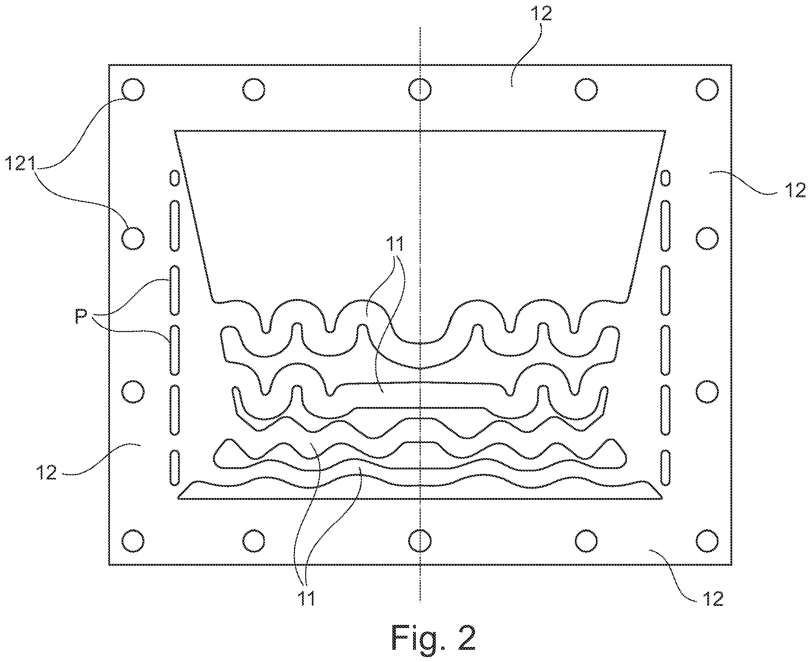

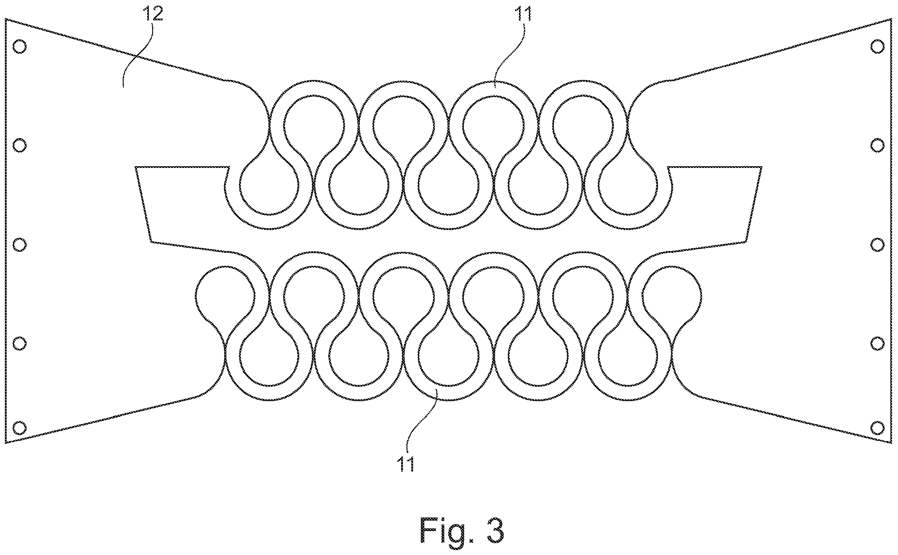

Erste Bereiche 11 der Platten 1 können unter Krafteinwirkung senkrecht zu der Platte 1 ausgewölbt und/oder durchgebogen werden. Diese ersten Bereiche 11 dienen der Formung eines mittleren Bereichs 21 einer Berstscheibe 2. Zweite Bereiche 12 der Platten 1 dienen der Befestigung der Platten 1 an einer Einrichtung, die durch die Berstscheibe 2 gesichert ist. Während alle in den Figuren dargestellten Vorrichtungen wenigstens einen ersten Bereich 11 und zwei zweite Bereiche 12 aufweisen, weist nur das Ausführungsbeispiel gemäß der Figur 1 einen dritten Bereich 13 auf. Die Ausführungsbeispiele gemäß der Figuren 2 und 3 weisen keinen dritten Bereich 13 auf. Der dritte Bereich 13, der im Vergleich zu dem ersten Bereich 11 wenig oder gar nicht unter Krafteinwirkung senkrecht zu der Platte 1 ausgewölbt und/oder durchgebogen werden kann, dient wie schon der erste Bereich 11 der Formung des mittleren Bereichs 21 der Berstscheibe 2.

Der erste Bereich 11 des Ausführungsbeispiels gemäß der Figur 1 umfasst einen Streifen in Form eines Zackens 111, dessen Enden 112 mit den zweiten Bereichen 12 verbunden sind. Im Bereich der Verbindung zwischen dem ersten Bereich 11 und den zweiten Bereichen 12 ist die Platte 1 perforiert (Perforationen P). Der dritte Bereich 13 des Ausführungsbeispiels gemäß Figur 1 wird durch einen annähernd geradlinigen Streifen gebildet, dessen Enden 131 ebenfalls durch Perforationen P von den zweiten Bereichen 12 getrennt sind. Der Zacken 111 des ersten Bereichs und der Streifen des dritten Bereichs 13 schließen ein Loch L ein, dass annähernd die Form eines Dreiecks hat.

In den zweiten Bereichen 12 sind Löcher 121 vorgesehen, welche zur Befestigung der Vorrichtung mittels Schrauben 3 (Figur 1a bis 1c) benutzt werden können. Vorzugsweise haben die zweiten Bereiche 12 ein durch die Löcher 121 gebildetes Lochbild, welches mit einem Lochbild in einem Randbereich 22 einer Berstscheibe 2 übereinstimmt. Die Schrauben 3 können also dazu benutzt werden zugleich die erfindungsgemäße Vorrichtung und eine Berstscheibe 2 zu befestigen, wie es in den Figuren 1a bis 1c dargestellt ist. Sind eine erfindungsgemäße Berstscheibe 2 und eine erfindungsgemäße Vorrichtung zu einer Anordnung, wie in den Figuren 1a bis 1c dargestellt, zusammengefügt, wird ein mittlerer Bereich 21 der Berstscheibe 2 von dem ersten Bereich 11 und dem dritten Bereich 13 zum Teil abgedeckt. Der dritte Bereich 13 der erfindungsgemäßen Vorrichtung ist dabei benachbart zu dem Bereich der Berstscheibe, der den mittleren Bereich 21 mit dem Randbereich 22 nach Art eines Scharniers miteinander verbindet. In diesem Bereich hat die Berstscheibe im Unterschied zu den anderen den mittleren Bereich 21 und die Randbereiche 22 verbindenden Bereiche keine Perforationen, entlang der im Entlastungsfall die Berstscheibe aufreißt und öffnet.

In einem Entlastungsfall wird der mittlere Bereich 21 der Berstscheibe 2 von den Randbereichen 22 entlang der Perforationen der Berstscheibe aufgetrennt und schwenkt um eine Achse in dem den mittleren Bereich 21 und den Randbereich 22 nach Art eines Scharniers verbindenden Bereich. Dadurch wird die Öffnung, welche durch die Berstscheibe verschlossen wurde freigegeben und eine Druckwelle und/oder eine Flamme kann austreten.

Der mittlere Bereich wird durch die Druckwelle gegen den ersten Bereich 11 und den dritten Bereich 13 gedrückt. Der erste Bereich 11 wölbt sich nach vorne und wird dabei verformt. Die Perforationen P zwischen dem ersten Bereich 11 und den zweiten Bereichen 12 werden gedehnt und der Zacken 111 knickt nach vorne ein. Die erfindungsgemäße Vorrichtung reißt aber im ersten Bereich 11 und an den Verbindungen zwischen dem ersten Bereich 11 und den zweiten Bereichen 12 nicht auf. Dadurch wird mit der erfindungsgemäßen Vorrichtung verhindert, dass der mittlere Bereich 21 um mehr als einen gewünschten Winkel aus seiner ursprünglichen Lage geschwenkt wird.

Das in der Figur 2 dargestellte Ausführungsbeispiel weist mehrere erste Bereiche 11 auf, die aus mäandrierenden Streifen gebildet werden, wobei die Stärke der Mäandrierung, d.h. die tiefe der Einbuchtungen von einer Mitte der Platte1 zu einem unteren Rand der Platte 1 abnimmt und somit in der Mitte eine stärkere Auswölbung möglich ist als am unteren Rand.

Das in der Figur 3 dargestellte Ausführungsbeispiel weist zwei erste Bereiche 11 auf, die ebenfalls aus mäandrierenden Streifen gebildet werden.

## Patentansprüche

1. Anordnung aus einer Berstscheibe (2) und einer Vorrichtung (1) zur Begrenzung eines Öffnungswinkels der Berstscheibe (2), wobei die Berstscheibe (2) Randbereiche hat, über welche die Berstscheibe (2) an Randbereichen einer Öffnung einer technischen Einrichtung anbringbar ist, und einen zwischen diesen liegenden mittleren Bereich hat, mit welcher die Öffnung der technischen Einrichtung verschließbar ist,
wobei die Vorrichtung zur Begrenzung des Öffnungswinkels eine Platte (1) aufweist, die einen ersten Bereich (11) aufweist, der unter Krafteinwirkung senkrecht zur Ebene der Platte (1) auswölbbar und/oder durchbiegbar ist, dass die Platte (1) auf einander gegenüberliegenden Seiten des ersten Bereichs (11) zweite Bereiche (12) aufweist, mit denen die Platte (1) befestigbar ist, dass der erste Bereich (11) mit den auf den einander gegenüberliegenden Seiten des ersten Bereichs (11) angeordneten zweiten Bereichen (12) verbunden ist und dass die Randbereiche der Berstscheibe (2) und die zweiten Bereiche der Vorrichtung zur Begrenzung eines Öffnungswinkels übereinander liegen.

2. Anordnung nach Anspruch 1, **dadurch gekennzeichnet, dass** die Platte (1) einen dritten Bereich (13) umfasst, der im Vergleich zu dem ersten Bereich (11) nicht oder weniger auswölbbar oder durchbiegbar ist.

3. Anordnung nach Anspruch 2, **dadurch gekennzeichnet, dass** der dritte Bereich (13) zwischen den zweiten Bereichen (12) und benachbart zu dem wenigstens einen ersten Bereich (11) angeordnet ist.

4. Anordnung nach einem der Ansprüche 1 bis 3, **dadurch gekennzeichnet, dass** der erste Bereich (11) wenigstens einen Einschnitt, eine Einbuchtung oder eine Einkerbung aufweist.

5. Anordnung nach Anspruch 4, **dadurch gekennzeichnet, dass** der wenigstens eine erste Einschnitt, die wenigstens eine erste Einbuchtung oder die wenigstens eine erste Einkerbung von einem ersten Rand in den wenigstens einen ersten Bereich (11) der Platte (1) hineinragt.

6. Anordnung nach einem der Ansprüche 1 bis 5, **dadurch gekennzeichnet, dass** der wenigstens eine erste Bereich einen Streifen umfasst, der mäanderförmig, zackenförmig, zickzackförmig oder ähnlich ist.

7. Anordnung nach einem der Ansprüche 1 bis 6, **dadurch gekennzeichnet, dass** der wenigstens eine erste Bereich (11) und der dritte Bereich (13) unmittelbar miteinander verbunden sind.

8. Anordnung nach einem der Ansprüche 1 bis 7, **dadurch gekennzeichnet, dass** der wenigstens eine erste Bereich (11) und der dritte Bereich (13) ein Loch in dem Blechzuschnitt (1) einschließen.

9. Anordnung nach Anspruch 8, **dadurch gekennzeichnet, dass** das Loch dreieckig oder annähernd dreieckig ist.

## Claims

1. Arrangement made of a rupture disc (2) and a device (1) for limiting an opening angle of the rupture disc (2), wherein the rupture disc (2) has edge regions by means of which the rupture disc (2) can be mounted on the edge regions of an opening of a technical apparatus, and has a central region situated between these with which the opening of the technical installation can be closed,
wherein the device for limiting the opening angle has a plate (1) which has a first region (11) which is distensible and/or deflectable perpendicularly to the plane of the plate (1) under the influence of force, that the plate (1) has, on sides of the first region (11) opposite to one another, second regions (12) with which the plate (1) can be fastened, that the first region (11) is connected to the second regions (12) arranged on the sides of the first region (11) which are opposite to one another, and that the edge regions of the rupture disc (2) and the second regions of the device for limiting an opening angle lie above one another.

2. Arrangement according to claim 1, **characterised in that** the plate (1) comprises a third region (13) which is not, or is less, distensible or deflectable in comparison to the first region (11).

3. Arrangement according to claim 2, **characterised in that** the third region (13) is arranged between the second regions (12) and adjacent to the at least one first region (11).

4. Arrangement according to any of claims 1 to 3, **characterised in that** the first region (11) has at least one incision, one indentation or one notch.

5. Arrangement according to claim 4, **characterised in that** the at least one first incision, the at least one first indentation or the at least one first notch protrudes from a first edge into the at least one first region (11) of the plate (1).

6. Arrangement according to any of claims 1 to 5, **characterised in that** the at least one first region comprises a stripe which is meander-shaped, jagged, zig-zag-shaped or similar.

7. Arrangement according to any of claims 1 to 6, **characterised in that** the at least one first region (11) and the third region (13) are directly connected to one another.

8. Arrangement according to any of claims 1 to 7, **characterised in that** the at least one first region (11) and the third region (13) enclose a hole in the sheet metal blank (1).

9. Arrangement according to claim 8, **characterised in that** the hole is triangular or virtually triangular.

## Revendications

1. Agencement constitué d'un disque de rupture (2) et d'un dispositif (1) pour limiter un angle d'ouverture du disque de rupture (2), dans lequel le disque de rupture (2) présente des zones de bord par lesquelles le disque de rupture (2) peut être appliqué sur des zones de bord d'une ouverture d'un appareil technique et présente une zone centrale située entre celles-ci, avec laquelle l'ouverture de l'appareil technique peut être fermée, dans lequel le dispositif présente une plaque (1) pour limiter l'angle d'ouverture, qui présente une première zone (11) qui peut être bombée et/ou fléchie sous l'effet d'une force perpendiculairement au plan de la plaque (1), en ce que la plaque (1) présente des deuxièmes zones (12) sur des côtés opposés de la première zone (11), avec lesquelles la plaque (1) peut être fixée, en ce que la première zone (11) est reliée aux deuxièmes zones (12) disposées sur les côtés mutuellement opposés de la première zone (11) et en ce que les zones de bord du disque de rupture (2) et les deuxièmes zones du dispositif de limitation d'un angle d'ouverture sont superposées.

2. Agencement selon la revendication 1, **caractérisé en ce que** la plaque (1) comprend une troisième zone (13) qui ne peut pas ou peut moins être bombée ou fléchie par rapport à la première zone (11).

3. Ensemble selon la revendication 2, **caractérisé en ce que** la troisième zone (13) est située entre les deuxièmes zones (12) et adjacente à l'au moins une première zone (11).

4. Agencement selon l'une quelconque des revendications 1 à 3, **caractérisé en ce que** la première zone (11) présente au moins une entaille, une échancrure ou une encoche.

5. Agencement selon la revendication 4, **caractérisé en ce que** l'au moins une première entaille, l'au moins une première échancrure ou l'au moins une première encoche fait saillie depuis un premier bord dans l'au moins une première zone (11) de la plaque (1).

6. Ensemble selon l'une quelconque des revendications 1 à 5, **caractérisé en ce que** l'au moins une première zone comprend une bande qui est en forme de méandre, en forme dentelée, en forme de zigzag ou similaire.

7. Agencement selon l'une quelconque des revendications 1 à 6, **caractérisé en ce que** l'au moins une première zone (11) et la troisième zone (13) sont directement reliées entre elles.

8. Agencement selon l'une quelconque des revendications 1 à 7, **caractérisé en ce que** l'au moins une première zone (11) et la troisième zone (13) renferment un trou dans le flan de tôle (1).

9. Agencement selon la revendication 8, **caractérisé en ce que** le trou est triangulaire ou approximativement triangulaire.
